**Europäisches Patentamt**

**European Patent Office**

**Office européen des brevets**

(19)

(11) Veröffentlichungsnummer: **0 236 867**
A2

## (12) EUROPÄISCHE PATENTANMELDUNG

(21) Anmeldenummer: 87102756.1

(22) Anmeldetag: 26.02.87

(51) Int. Cl.4: **G02B 6/24** , G02B 23/16 , G02B 23/26

(30) Priorität: 04.03.86 DE 3606990
11.02.87 DE 3704162

(43) Veröffentlichungstag der Anmeldung:
16.09.87 Patentblatt 87/38

(84) Benannte Vertragsstaaten:
DE FR GB

(71) Anmelder: **Richard Wolf GmbH**
**Pforzheimer Strasse 32**
**D-7134 Knittlingen(DE)**

(72) Erfinder: **Hiltebrandt, Siegfried**
**August-Lämmle-Strasse 16**
**D-7134 Knittlingen(DE)**

(74) Vertreter: Patentanwälte Dipl.-Ing. Klaus
Westphal Dr. rer. nat. Bernd Mussgnug Dr.
rer.nat. Otto Buchner
Waldstrasse 33
D-7730 VS-Villingen(DE)

(54) Vorrichtung zum Anschliessen eines Endoskops oder Technoskops mit Lichtleit-Faserbündel an ein Lichtleitkabel und Verfahren zu deren Herstellung.

(57) An das Ende des Lichtleit-Faserbündels eines Endoskops oder Technoskops wird eine plane Endfläche derart angeschliffen, daß die Mittelachsen aller Lichtleitfasern unter einem von 90° verschiedenen Winkel in die Endfläche münden. Entweder können die Lichtleitfasern parallel zur Bündellängsachse des Faserbündels angeordnet und die Endfläche kann schräg zur Bündellängsachse angeschliffen werden oder die Lichtleitfasern können spiralig um die Bündellängsachse angeordnet und die Endfläche kann senkrecht zur Bündellängsachse angeschliffen werden. Dadurch kann bei Verwendung üblicher und vorhandener Lichtprojektoren und Lichtleitkabel der Lichtaustrittswinkel am distalen Ende des Faserbündels ohne wesentliche Lichtverluste vergrößert werden.

Fig.4

## Vorrichtung zum Anschließen eines Endoskops oder Technoskops mit Lichtleit-Faserbündel an ein Lichtleitkabel und Verfahren zu deren Herstellung

Die Erfindung betrifft eine Einrichtung nach dem Oberbegriff des Anspruchs 1 und ein Verfahren zu deren Herstellung.

Der Lichtaustrittswinkel eines Lichtleit-Faserbündels wird im wesentlichen durch den Winkel bestimmt, unter welchem die Lichtstrahlen in die Lichtleitfasern oder Glasfasern eintreten, und er ist mit diesem identisch, wenn die Lichstrahlen innerhalb eines berechenbaren Grenzwinkels in die Stirnfläche jeder Glasfaser eintreten, die seitlichen Begrenzungsflächen der Fasern zueinander parallel liegen (also nicht z.B. konisch ausgebildet sind) und über ihre Längserstreckung nicht gekrümmt verlaufen. Außerhalb des erwähnten Grenzwinkels auf die Stirnflächen der Glasfasern auftreffende Strahlen werden bereits auf dieser Stirnfläche reflektiert. Auch winzige Furchen im Inneren der Glasfasern, Rauhheit der Oberflächen und die Biegung von Glasfasern beeinflussen den Winkel der austretenden Lichtstrahlen.

Die Apertur, also der halbe Winkel, unter welchem die Randstrahlen noch in die Glasfasern eintreten können, beträgt bei den meist verwendeten Glasfasern zwischen 40 und 42, 5°, so daß damit ein Gesichtsfeld von ca. 80 bis 85° entsprechend der doppelten Apertur ausgeleuchtet werden kann. Neben diesen meist verwendeten Glasfasern stehen auch sogenannte Weitwinkelfasern mit einer Apertur von über 60° zur Verfügung, die jedoch den erheblichen Nachteil aufweisen, bei einer Faserlänge von mehr als 700 mm die spektrale Übertragungscharakteristik des durch die Fasern geleiteten Lichtes zu verändern, so daß die mit derart ausgeleuchteten Weitwinkelfasern beleuchteten Obkekte nicht weiß, sondern gelblich erscheinen. In der Technik ganz allgemein, besonders jedoch in der Endoskopie und Technoskopie, besteht das Bedürfnis, mit einem Lichtleitkabel ein möglichst großes Objektfeld mit einem Gesichtsfeld von mehr als 75° beleuchten zu können. Es wurden daher besonders in der Endoskopie auch bereits Weitwinkelfasern verwendet, wobei das Licht eines Lichtprojektors mittels eines diese Weitwinkelfasern enthaltenden Lichtleitkabels unter Zwischenschalten eines Glasfaserkegels in das proximalseitige Anschlußende des Lichtleitkabels eingeführt wurde. Derartige Glasfaserkegel vergrößern zwar einerseits die Apertur der Anordnung, weisen andererseits jedoch den Nachteil auf, daß durch die zusätzliche Trennstelle ein Lichtverlust auftritt, der unter ungünstigen Umständen bis zu 50 % betragen kann.

Bei einer weiteren bekannten Ausführungsform wurde bei einem Endoskop das Kondensorsystem eines Lichtprojektors so ausgebildet, daß die Aperturvergrößerung bereits durch die verwendete Lichtquelle selbst erzielt wird. Diese Lösung setzt jedoch voraus, daß zur Licht übertragung zwischen Lichtprojektor und Endoskop ein spezielles Lichtleitkabel angeordnet wird, womit die bereits in der Anwendung befindlichen Lichtleitkabel, die nur eine geringere Apertur übertragen, für die weitere Verwendung nicht mehr eingesetzt werden könnten.

Der Erfindung liegt daher die Aufgabe zugrunde, eine Vorrichtung zum Anschließen eines technischen oder medizinischen Instruments, insbesondere eines Endoskops oder Tecknoskops, mit Lichtleit-Faserbündel an ein Lichtleitkabel sowie ein Verfahren zu deren Herstellung zu schaffen, wobei in üblicher Weise ausgebildete Lichtprojektoren und Lichtleitkabel sowie auch bereits vorhandene Lichtleitkabel verwendet werden können, um ein möglichst großes Objektfeld unter Beibehalten der spektralen Lichtübertragungscharakteristik auszuleuchten.

Diese Aufgabe wird bei einer Einrichtung der eingangs genannten Art durch die kennzeichnenden Merkmale des Anspruchs 1 gelöst.

Die schräge Anordnung der die plane Endfläche des Lichtleit-Faserbündels im Endoskop oder Technoskop bildenden Stirnflächen jeder einzelnen Lichtletifaser bezüglich der Mittelachse der Faser bewirkt am Austrittsende, beispielsweise am distalen Ende eines Endoskops eine Vergrößerung des Lichtaustrittswinkels ohne wesentliche Veränderung der spektralen Lichtübertragungscharakteristik.

Bei einer ersten Ausführungsform des erfindungsgemäßen Herstellungsverfahrens gemäß Anspruch 2 werden die Lichtleitfasern am proximalen Ende des Faserbündels parallel angeordnet und in einer Fassung festgelegt. Die Schrägstellung der Stirnflächen der einzelnen Lichtleitfasern kann dann einfach dadurch erreicht werden, daß das ganze in der Fassung, beispielsweise durch Einkitten, festgelegte Bündelende schräg angeschliffen und poliert wird.

Bei der Ausführungsform gemäß Anspruch 3 wird das proximale Ende des Faserbündels um einen vorbestimmten Winkel um die Bündellängsachse verdreht und erst anschließend in eine Fassung eingekittet. Dieses Bündelende wird nun senkrecht zur Bündelachse angeschliffen und poliert. Durch die Verdrehung des proximalseitigen Bündelendes ergibt sich nämlich eine spiralförmige Anordnung jeder einzelnen Lichtleitfaser, bei der die Mittelachse der Faser schräg in eine senkrecht zur Bündelachse stehende Endfläche einmündet.

Die Fassungen, in denen die Bündelenden der Lichtleitfasern festgelegt sind, können beispielsweise Kabelanschlußteile sein. Der Winkel zwischen Fasermittelachse und Bündelachse kann in weiten Grenzen beliebig gewählt werden. Bei einer bevorzugten Ausführungsform liegt er bei etwa 10°.

Dadurch kann bei Verwendung üblicher und vorhandener Lichtprojektoren und Lichtleitkabel der Lichtaustrittswinkel am distalen Ende des in einem Technoskop oder Endoskop angeordneten Faserbündels ohne wesentliche Lichtverluste vergrößert werden.

Anhand der Figuren werden vorteilhafte Ausführungsbeispiele der Erfindung näher erläutert. Es zeigen

Fig. 1 und 2 schematische Darstellungen der Lichtstrahlführung bei einer herkömmlichen senkrechten Faserstirnfläche bzw. bei einer schräg angeschliffenen Stirnfläche und

Fig. 3 und 4 Axialschnitte durch zwei Ausführungsbeispiele des proximalseitigen Endes eines erfindungsgemäß verwendeten Lichtleit-Faserbündels mit zugehörigen Anschlußteilen eines Lichtleitkabels.

In allen Figuren sind für gleiche oder entsprechende Teile die gleichen Bezugszeichen verwendet.

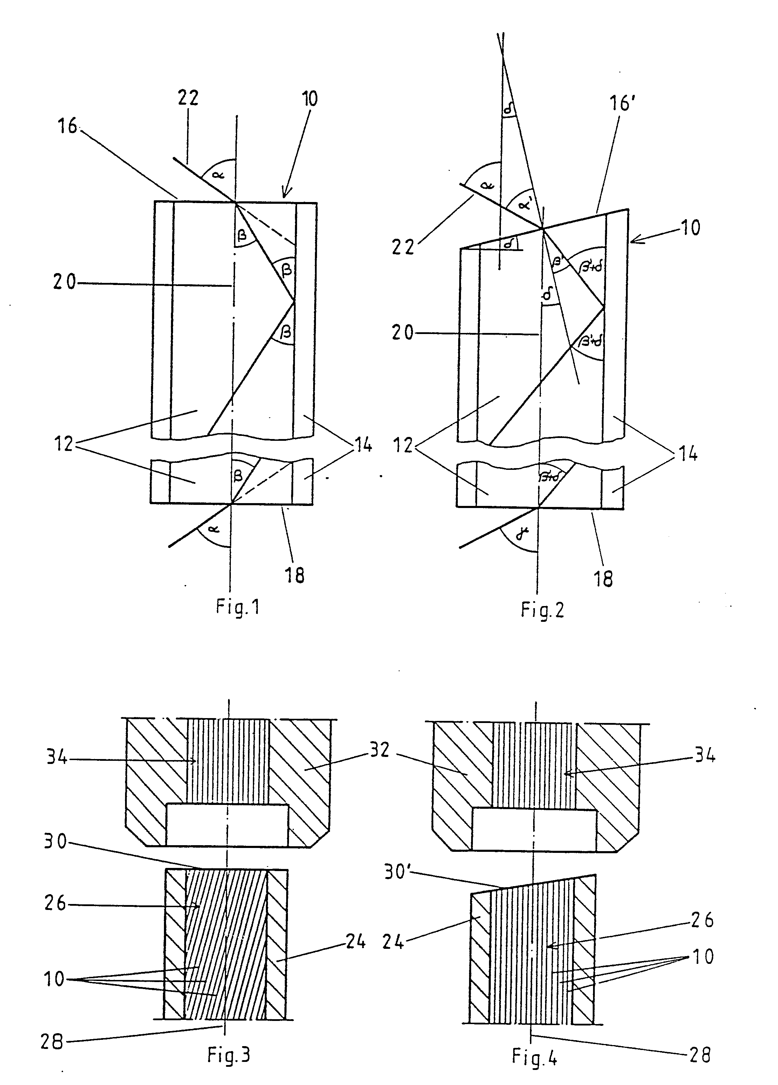

Die in Fig. 1 dargestellte und allgemein mit 10 bezeichnete Lichtleitfaser weist einen Faserkern 12 und einen Fasermantel 14 auf, dessen Brechungsindex kleiner ist als derjenige des Faserkerns. Die Stirnflächen 16 und 18 an den Enden der Lichtleitfaser 10-sind senkrecht zur Mittelachse 20 angeschliffen. Ein unter dem Einfallswinkel α auf die Stirnfläche 16 einfallender Lichtstrahl 22 wird daher unter dem Brechungswinkel β in den Glasfaserkern 12 geleitet und unter dem gleichen Winkel am Fasermantel 14 totalreflektiert. An der ebenfalls senkrechten Austrittsfläche 18 tritt der Lichtstrahl sodann wieder unter dem dem Einfallswinkel entsprechenden Winkel α aus.

Erfindungsgemäß ist, wie in Fig. 2 dargestellt, die Eintrittsstirnfläche 16' der Lichtleitfaser 10 unter einem Winkel δ gegenüber der Mittelachse 20 der Lichtleitfaser angeordnet. Ein unter dem Winkel α bezüglich der Mittelachse 20 einfallender Lichtstrahl 22 hat gegenüber der Stirnfläche 16' den um den Winkel δ verkleinerten Einfallswinkel α' und den ebenfalls um den Winkel δ verkleinerten Brechungswinkel β'. Er wird unter dem Winkel (β' + δ) am Mantel 14 totalreflektiert und tritt aus der senkrechten Stirnfläche 18 am anderen Ende der Lichtleitfaser 10 unter dem bezüglich des Winkels α vergrößerten Winkel γ aus. Durch die schräge Anordnung der Eintrittsstirnfläche 16' wird daher der Austrittswinkel γ gegenüber dem Eintrittswinkel α vergrößert.

Bei der in Fig. 3 dargestellten Ausführungsform der erfindungsgemäßen Anschlußeinrichtung ist das Ende des in einem nicht dargestellten Endoskop oder Technoskop angeordneten Faserbündels 26 von einer Fassung oder Ummantelung 24 umgeben und in dieser eingekittet. Die einzelnen Lichtleitfasern 10 sind spiralförmig bezüglich der Bündellängsachse 28 verdreht angeordnet und an das Ende ist eine plane Endfläche 30 angeschliffen, die auf der Bündellängsachse 28 senkrecht steht. Die Mittelachsen sämtlicher Lichtleitfasern 10 münden daher schräg in die Endfläche 30. Im oberen Teil der Fig. 3 ist ein Anschlußkupplungsteil 32 eines Lichtleitkabels 34 dargestellt, das Licht eines nicht dargestellten Lichtprojektors dem Endoskop oder Technoskop zuführt. An den Kupplungsteil 32 ist die Fassung 24 in einfacher Weise ankuppelbar.

Bei der in Fig. 4 dargestellten Ausführungsform der Erfindung sind die Lichtleitfasern 10 des Faserbündels 26 parallel zur Bündelachse 28 angeordnet und in die Fassung 24 eingekittet. An das Ende des Faserbündels 26 ist eine plane Endfläche 30' angeschliffen, die schräg zur Bündellängsachse 28 steht.

Bei beiden Ausführungsbeispielen gemäß Fig. 3 und 4 stehen daher die Stirnflächen 16' sämtlicher Lichtleitfasern 10 unter einem Winkel δ bezüglich der Mittelachse 20 jeder Lichtleitfaser, wie in Fig. 2 dargestellt.

**Ansprüche**

1. Vorrichtung zum Anschließen eines in einem technischen oder medizinischen Instrument, insbesondere in einem Endoskop oder Technoskop, angeordneten Lichtleit-Faserbündels an ein Lichtleitkabel, wobei, das proximalseitige Ende des Faserbündels in einer Fassung festgelegt, mit einer planen Endfläche versehen und an einen Kupplungsteil des Lichtleitkabels ankuppelbar ist, dadurch gekennzeichnet, daß die Mittelachsen (20) aller Lichtleitfasern (10) des zylindrischen Faserbündelendes (26) unter einem von 90° verschiedenen Winkel in die Endfläche (30, 30') münden.

2. Verfahren zur Herstellung der Vorrichtung nach Anspruch 1, wobei die Lichtleitfasern des Faserbündels parallel zur Bündellängsachse angeordnet und das proximalseitige Ende des Faserbündels in einer Fassung festgelegt wird, dadurch gekennzeichnet, daß an das in der Fassung festgelegte Bündelende eine plane Endfläche angeschliffen wird, die unter einem von 90° verschiedenen Winkel zur Bündellängsachse angeordnet ist.

3. Verfahren zur Herstellung der Vorrichtung nach Anspruch 1, dadurch gekennzeichnet, daß das proximale Ende des Lichtleit-Faserbündels um einen vorbestimm ten Winkel um die Bündellängsachse verdreht, an schließend in einer Fassung festgelegt und sodann eine plane Endfläche angeschliffen wird, die senkrecht zur Bündellängsachse angeordnet ist.

Fig.1

Fig.2

Fig.3

Fig.4